# EUROPÄISCHE PATENTANMELDUNG

(11) **EP 1 360 926 A1**
(43) Veröffentlichungstag der Anmeldung: **12.11.2003**
(21) Anmeldenummer: 03007617.8
(22) Anmeldetag: 02.04.2003
(51) Int. Cl.: A47L 15/42, D06F 39/08

(54) **Anschluss für Wasserablassleitungen in Waschmaschinen**

(30) Priorität: 03.04.2002 ES 200200884
(71) Anmelder: BSH Balay, S.A., 50059 Zaragoza (ES)
(72) Erfinder: Caudevilla, Angel, 50007 Zaragoza (ES)

(57) **Zusammenfassung**

Anschluss für Wasserablassleitungen in Waschmaschinen, bei dem diese Leitungen aus einem flexiblen gewellten Kunststoffschlauch bestehen, deren glatter Endabschnitt 9 durch eine Hülse 8 aus Gummispritzguss überdeckt ist. Der glatte Abschnitt 9 ist wenigstens teilweise in das Innere der Hülse 8 eingebettet und bildet auf diese Weise das Kernstück der Versteifung der Hülse.

## Beschreibung

### GEBIET DER ERFINDUNG

Die Erfindung betrifft einen Anschluss, der vorgesehen ist, um ein Verbindungsmittel zwischen zwei Leitungen für den Wasserabfluss aus Waschmaschinen oder Ähnlichem bereitzustellen, ausgehend von einer Gummispritzmuffe, die in einen äußeren und glatten Abschnitt einer flexiblen Leitung eingeführt wird, wobei eine Hülse das Mittel darstellt, um den Anschluss der anderen Leitung aufzunehmen, die an die flexible Leitung anzuschließen ist.

Es ist die Aufgabe der Erfindung, einen Anschluss für Waschmaschinen oder Geschirrspüler bereitzustellen, mit dem ein Anschluss für eine leichte, schnelle und einfache Verbindung von flexiblen Leitungen hergestellt werden kann, und zwar ohne Einsatz von Klemmelementen wie Rohrschellen oder Ähnlichem, die in herkömmlichen Anschlusssystemen verwendet werden.

### STAND DER TECHNIK

In Haushalt-Waschmaschinen, gleich ob Waschmaschinen für Kleider oder Geschirr, erfolgt der Anschluss eines entsprechenden Laugenbehälters an eine Ablasspumpe für das Wasser über eine flexible Leitung und von dieser Ablasspumpe bis zum externen Abfluss der Maschine oder bis zum Abfluss aus der Wohnung, in der die Waschmaschine aufgestellt ist, über eine flexible gewellte Kunststoffleitung, deren Wellen ringförmige Falten in der Kunststoffwandung der Leitung darstellen, um die ansich steifen Leitungen mit den Merkmalen der Flexibilität auszustatten. Bei der Verbindung dieser flexiblen Kunststoffleitung mit der Pumpe findet eine Hülse oder Muffe aus Spritzgummi Anwendung, die zur Verlängerung der Wellrohrleitung verbunden wird, so dass die Hülse geeignet ist, die angesetzte Leitung der Ablasspumpe aufzunehmen, wozu die Verwendung von Rohrschellen erforderlich ist, um das Festziehen des Anschlusses nach der Verbindung der beiden Leitungen vorzunehmen.

Folglich ist nach dem herkömmlichen System bei der Verbindung zwischen Leitungen von Waschmaschinen die Ausbildung einer Gummihülse mit entsprechenden Abmessungen ebenso wie die eines Anschlussflanschs für die Sicherung der Verbindung erforderlich.

### BESCHREIBUNG DER ERFINDUNG

Der Anschluss, der Gegenstand der Erfindung ist, wird bereitgestellt, um den Anschluss von in Waschmaschinen, insbesondere Waschmaschinen für Wäsche, eingesetzten Ablassleitungen vorzunehmen, und ist so ausgebildet, dass er einen wirtschaftlichen Anschluss und einfachen Einbau in einem Serienherstellungsprozess ermöglicht, beruhend auf dem Einsatz einer Gummihülse als einem Spritzgussteil, die in das freie Ende der flexiblen Leitung eingeführt wird, wozu diese mit einem glatten Abschnitt, d.h. ohne Wellung, versehen ist, in den eben diese Hülse aus Spritzgummi eingeführt wird, wobei diese sowohl die Innenfläche als auch die Außenfläche dieses glatten Endes der flexiblen Leitung überdeckt, so dass der glatte Abschnitt das Kernstück der Versteifung der Hülse selbst darstellt, und an der anderen Seite wird mit Druck die andere Leitung verbunden, zum Beispiel die für den Ablass zur Pumpe.

Mit diesem Anschlusssystem wird die nötige Versteifung in der Verbindung erreicht, ohne dass Rohrschellen oder Klemmflansche erforderlich wären, während gleichzeitig eine Einsparung an Gummimaterial erzielt wird; denn die Abmessungen der Stärke der Anschlusshülse, die das Anschlusssystem der Erfindung ausbildet, sind geringer als die der herkömmlichen Hülsen.

Außerdem, da keine Flansche oder Rohrschellen eingesetzt werden müssen, ist die Serienfertigung einfacher und schneller; denn es muss nur die Ausgangsleitung der Pumpe an die Gummihülse angeschlossen werden.

### KURZE BESCHREIBUNG DER ZEICHNUNGEN

Als Ergänzung der im Nachstehenden folgenden Beschreibung und mit dem Ziel, zu einem besseren Verständnis der Merkmale der Erfindung beizutragen, ist der vorliegenden Beschreibung ein Satz Zeichnungen beigefügt, auf deren Grundlage die Neuerungen und Vorteile des Anschlusses für Versorgungs- bzw. Ablassleitungen für Wasser in Waschmaschinen, ausgeführt gemäß dem Gegenstand der Erfindung, leicht zu verstehen sind. In der Zeichnung zeigen
- Fig. 1: eine schematische Ansicht des Längsschnitts eines herkömmlich verbundenen Anschlusses.
- Fig. 2: eine schematische Querschnittsansicht des Anschlusses gemäß Erfindung.
- Fig. 3: eine andere erfindungsgemäße Ausführungsform des Anschlusses in einer Ansicht gemäß Fig. 2.

### BESCHREIBUNG DER BEVORZUGTEN AUSFÜHRUNGSFORM

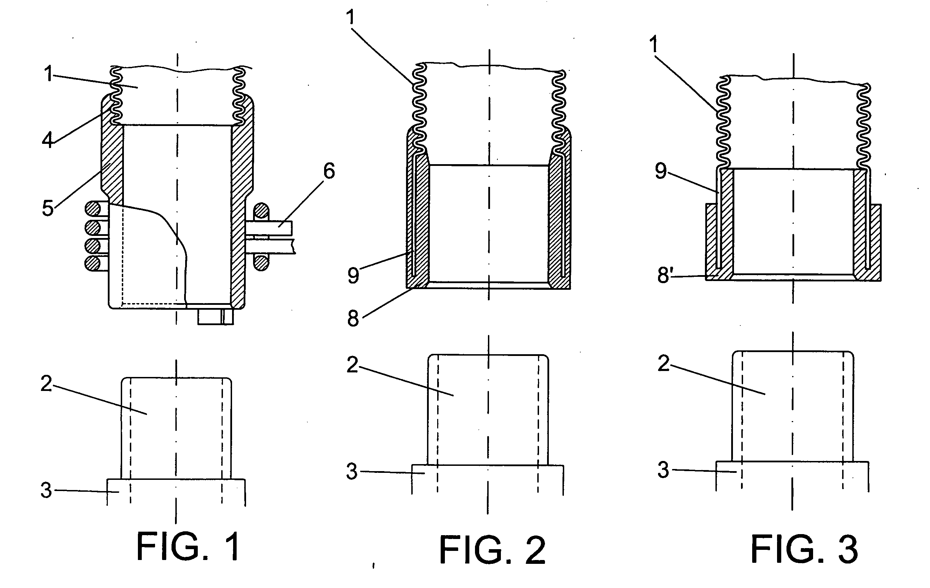

In Figur 1 ist ein herkömmlicher Anschluss zwischen der Leitung 1 einer Waschmaschine und einer Leitung 2 in Verbindung mit einer Ablasspumpe 3 dargestellt, mit der Besonderheit, dass die Leitung 1 mittels ringförmiger Falten 4 gewellt und flexibel ist und die Pumpe 3 mit einer fixen Abflussleitung der Wohnung verbindet, in der die Waschmaschine aufgestellt ist.

Herkömmlicherweise wird der Anschluss mit einer Hülse oder Muffe 5 aus Spritzgummi hergestellt, die mit dem Ende 4 mit Falten der flexiblen Leitung 1 verbunden ist, wobei die Hülse 5 zum Anschluss der entsprechenden Leitung 2 für den Wasserablass geeignet ist, die an die entsprechende Ablasspumpe angeschlossen ist.

Sobald die Verbindung oder der Anschluss der Gummihülse oder -muffe 5 mit der Leitung 2 hergestellt ist, wird diese Verbindung oder Anschluss mittels eines Klemmflansches oder einer Rohrschelle 6 gesichert, was nicht nur einen Zeitverlust bei der Montage und beim Befestigen dieses Flanschs oder dieser Rohrschelle 6 bedeutet, sondern es besteht auch die Möglichkeit, dass sich die Hülse oder Muffe 5 vom Faltenabschnitt 4 der Leitung 1 löst und zwar gerade als Folge eines unsicheren Sitzes auf diesen Falten.

Abweichend von diesen Merkmalen besteht die Neuerung des Anschlusses zwischen der Leitung 1 mit Falten und der Leitung 2, die mit der Pumpe 3 verbunden ist, darin, dass sie mittels einer Gummimuffe oder -hülse 8 erfolgt, die auf einen äußeren und glatten Abschnitt 9 der Leitung 1 gespritzt ist, wodurch dieser Abschnitt 9 in das Material der Hülse oder Muffe 8 eingebettet ist.

Dieser Abschnitt 9 stellt daher das Kernstück für die Versteifung derselben dar, wie eindeutig in Figur 2 dargestellt ist. Auf diese Weise wird der Anschluss der Leitung 2 an dieser Hülse 8 erreicht, ohne dass Klemmflansche oder Rohrschellen erforderlich sind, denn der Anschluss, der durch die Hülse 8 auf dem glatten und äußeren Abschnitt 9 der Leitung 1 erfolgt, benötigt keines dieser zusätzlichen Elemente, wobei ein steifer, schneller und effizienter Anschluss erreicht wird.

In Figur 3 ist eine Ausführungsform gezeigt, in der die Hülse 8' die gesamte innere Fläche des glatten Abschnitts 9 und nur einen Teil seiner äußeren Fläche bedeckt.

## Patentansprüche

1. Anschluss für Wasserablassleitungen in Waschmaschinen, bei dem diese Leitungen aus flexiblem gewelltem Kunststoff hergestellt sind, **dadurch gekennzeichnet, dass** für den Anschluss eine Hülse (8, 8') aus Gummi als einem Spritzgussteil vorgesehen ist, in die ein äußerer und glatter Abschnitt (9) der flexiblen gewellten Leitung (1) eingeführt ist, wobei dieser glatte Abschnitt (9) vom Material der Hülse wenigstens teilweise umschlossen ist und die Versteifung der Hülse darstellt, und dass die Hülse unmittelbar mit der entsprechenden Leitung (2) ohne zusätzliche Klemmelemente verbunden ist.

2. Anschluss nach Anspruch 1, **dadurch gekennzeichnet, dass** die Hülse (8) den glatten Abschnitt (9) der flexiblen Leitung (1) komplett innen und außen überbedeckt.

3. Anschluss nach Anspruch 1, **gekennzeichnet dadurch, dass** die Hülse (8') die Innenseite des glatten Abschnitts (9) der flexiblen Leitung (1) komplett und die Außenseite des glatten Abschnitts (9) teilsweise bedeckt.
